(19) Europäisches Patentamt
European Patent Office
Office européen des brevets

(11) Veröffentlichungsnummer : **0 387 663 B1**

# (12) EUROPÄISCHE PATENTSCHRIFT

(45) Veröffentlichungstag der Patentschrift : **01.09.93 Patentblatt 93/35**

(51) Int. Cl.$^5$ : **A01N 43/50,** A01N 43/54, A01N 53/00, A01N 41/06, A01N 47/30

(21) Anmeldenummer : **90104251.5**

(22) Anmeldetag : **06.03.90**

## (54) Mittel gegen Keratinschädlinge.

(30) Priorität : **17.03.89 DE 3908814**
**16.01.90 DE 4000972**

(43) Veröffentlichungstag der Anmeldung : **19.09.90 Patentblatt 90/38**

(45) Bekanntmachung des Hinweises auf die Patenterteilung : **01.09.93 Patentblatt 93/35**

(84) Benannte Vertragsstaaten : **BE DE GB**

(56) Entgegenhaltungen :
**EP-A- 0 074 335**
**EP-A- 0 192 060**

(56) Entgegenhaltungen :
**EP-A- 0 311 851**
**EP-A- 0 318 431**
**DE-A- 2 514 402**
**DE-A- 2 936 457**

(73) Patentinhaber : **BAYER AG**
**D-51368 Leverkusen (DE)**

(72) Erfinder : **Haas, Johannes**
**Im Bend 11**
**D-4048 Grevenbroich (DE)**
Erfinder : **Matthaei, Hans-Detlef, Dr.**
**Paul Klee-Strasse 67**
**D-5090 Leverkusen 1 (DE)**
Erfinder : **Krehan, Ingomar, Dr.**
**Ludwig Jahn-Strasse 54**
**D-5000 Köln 40 (DE)**

EP 0 387 663 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Behandlung von keratinhaltigen Textilmaterialien zur Bekämpfung von Motten und anderen keratinverdauenden Textilschädlingen auf der Basis von Nitromethylen- oder Nitroiminoimidazolinen sowie deren Mischungen mit Cyclopropancarbonsäurephenoxybenzylestern, 5-Phenylcarbamoyl-barbitursäurederivaten, Chlormethylsulfonamidodiphenylether und/oder Diphenylharnstoffen.

Es ist bekannt, daß diese Stoffgruppe insektizide Eigenschaften aufweist und deshalb insbesondere für den Einsatz auf dem Agrarsektor empfohlen wird (vgl. DE-A 2 514 402 und EP-A 192 060 = US-A 4 747 060).

Ferner ist bekannt, daß Cyclopropancarbonsäurephenoxybenzylester verschiedenster Formen starke insektizide Eigenschaften aufweisen (vgl. z.B. GB-A 1 413 491 und DE-A 2 709 264), 5-Phenylcarbamoylbarbitursäureverbindungen insektizide Eigenschaften haben (vgl. CH-A 653 840 und EP-A 0 169 168), Chloraminodiphenylether, z.B. 4,5,2', 4', 4'-Pentachlor-2-chlormethylsulfonamidodiphenylether, auf Texilen appliziert, eine fraßhemmende Wirkung gegenüber keratinverdauenden Schädlingen haben (vgl. EP-A 311 851), Diphenylharnstoffe bestimmter Zusammensetzung ebenfalls, auf Textilien appliziert, fraßhemmende Wirkung gegenüber keratinverdauenden Schädlingen haben (vgl. EP 0 318 431 A2).

Es wurde nun gefunden, daß diese Stoffe auch eine ausgezeichnete fraßverhindernde Wirkung gegen Motten und andere keratinverdauende Insekten zeigen, wenn man sie in Kombination mit branchenüblichen Formierhilfsmitteln unter textilindustriellen Bedingungen zur Behandlung von keratinhaltigen Textilmaterialien anwendet.

Dieser Effekt ist als überraschend anzusehen, da keineswegs generell Insektizide, die im Agrarsektor als Spritzmittel eingesetzt werden, auch zur Verhütung von Textilschäden durch die verdauungsspezialisierten Keratinschädlinge dienen können.

Es ist weiterhin bemerkenswert, daß die erfindungsgemäßen Mittel gegenüber vergleichbaren bekannten Schutzmitteln eine höhere Wirksamkeit aufweisen.

Hervorzuheben ist ferner das deutlich günstigere ökotoxikologische Verhalten, insbesondere bezüglich der Fischtoxizität, der erfindungsgemäßen Verbindungen im Vergleich zu den aus dem Stand der Technik her bekannten Mitteln.

Es ist schließlich als besonders überraschend anzusehen, daß Mischungen der Verbindungen I-V im Vergleich zu den Einzelkomponenten einen deutlichen synergistischen Effekt bei der Bekämpfung von Keratinschädlingen zeigen.

Bevorzugt einzusetzende Mittel entsprechen der Formel

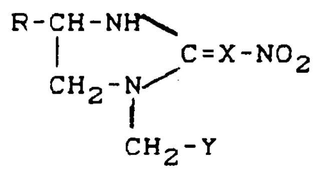

(I)

worin

R für H oder $CH_3$,

X für CH oder N und

Y für einen gegebenenfalls durch Halogen oder $C_1$-$C_4$-Alkyl substituierten Pyridin-, Pyrazin- oder Pyrimidinrest stehen.

Im Falle der Cyclopropancarbonsäurephenoxybenzylester werden bevorzugt solche der Formel

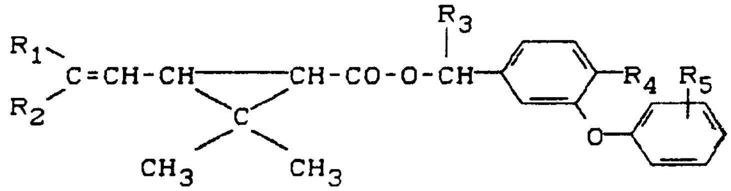

(II)

genommen,

in welcher

$R_1$ für Wasserstoff, Alkyl oder Halogen,
$R_2$ für Alkyl, Halogen, gegebenenfalls durch Halogen substituiertes Phenyl,
$R_3$ für Wasserstoff, Cyano oder Ethinyl,
$R_4$ für Wasserstoff oder Halogen und
$R_5$ für Wasserstoff oder Halogen stehen.

Von den Chlormethylsulfonamidodiphenylethern werden insbesondere die der Formel

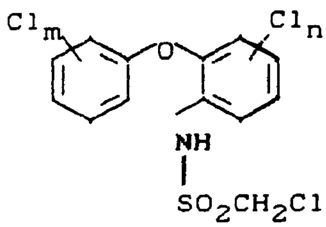

(III)

eingesetzt,
in welcher
die Summe von m und n bei 4-7 liegt.

Im Falle der Verwendung von 5-Phenylcarbamoylbarbitursäurederivaten als weitere Komponente werden bevorzugt solche der Formel

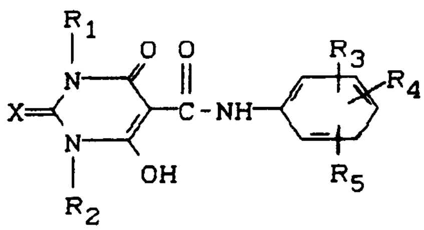

(IV)

eingesetzt.

Darin ist
X Sauerstoff oder Schwefel,
$R_1$ und $R_2$ jeweils Alkyl mit 3 oder 4 C-Atomen, Alkenyl mit 3 oder 4 C-Atomen, Benzyl oder gegebenenfalls substituiertes Phenyl,
$R_3$ Halogen, Nitro oder C(Halogen)$_3$,
$R_4$ Wasserstoff, Halogen oder C(Halogen)$_3$ und
$R_5$ Wasserstoff, Halogen, Methyl oder Methoxy.

Werden Diphenylharnstoffe eingesetzt, werden bevorzugt solche der Formel

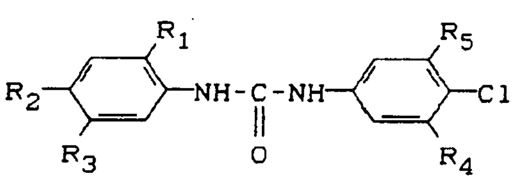

(V)

genommen, wobei
$R_1$ Wasserstoff oder 4-Chlorphenoxy-6-sulfonat,
$R_2$ Wasserstoff oder Chlor,
$R_3$ Wasserstoff oder Trifluormethyl,
$R_4$ Wasserstoff oder Chlor,
$R_5$ Wasserstoff oder Trifluormethyl
sind.

Dabei wird unter "Halogen" insbesondere Fluor und - vor allem - Chlor verstanden.

Bevorzugter Alkylrest ist die Methylgruppe.

Besonders bevorzugt sind Verbindungen der Formel (I), worin X = N und Y einen Chlorpyridinrest bedeuten.

Die Stoffe an sich sind - wie bereits erwähnt - bekannt und ausführlich in der EP-A 192 060 beschrieben.

Auch die Formierung dieser Stoffe für die textile Applikation erfolgt nach bekannten Methoden mittels üblicher Hilfsmittel, wie z.B. Emulgatoren, wassermischbare organische Lösemittel, Stellmittel, Gefrierschutzmittel u. dgl. für eine Flüssigformierung.

Zu den Keratinschädlingen gehören
aus der Ordnung der Tineidae (echte Motten)
z.B. Tineola bisselliella (Kleidermotte),
Tinea pellionella (Pelzmotte) und
Hofmannophila pseudospretella (Samenmotte)
und aus der Reihe der Käfer die Larven zweier Gattungen der Dermestidae (Speckkäfer),
z.B. Anthrenus verbasci (Wollkraut-Blütenkäfer),
Anthrenus pimpinellae (Bibernell-Blütenkäfer),
Anthrenus scrophulariae (Gemeiner Teppichkäfer),
Anthrenus fasciatus (Bebänderter Teppichkäfer),
Attagenus pellio (Gefleckter Pelzkäfer),
Attagenus piceus (Dunkler Pelzkäfer).

Die erfindungsgemäßen Schutzstoffe können in verschiedenster Weise eingesetzt werden, z.B. in Pulverform beim Läutern von Pelzen und Fellen, im Puderverschnitt zur Abwehr oder Abtötung von Schädlingen, in Form von Emulsionen oder Dispersionen aus wäßriger Flotte oder aus organischen Lösungsmitteln nach Art der Chemischreinigung.

Die Anwendung kann in praktisch allen Verarbeitungszuständen und allen in der Textilindustrie üblichen Naßapplikations- und Sprühprozessen gegebenenfalls gemeinsam mit anderen Veredlungsprozessen an Wolle, Wolltextilien und wollhaltigen Textilien sowie Federn, Haaren und verwandtem oder daraus gefertigtem Material erfolgen.

Das Mittel kann beispielsweise dem Färbebad vor dem üblichen Färbeprozeß zugesetzt werden, es kann aber auch beim Waschen von Wolle appliziert werden. Bevorzugt wird die Behandlung in wäßrigem Medium durchgeführt.

Beispiel 1

Wolle, Wollgarn oder ein Flächengebilde aus Wolle wird bei 40°C im Flottenverhältnis 1:10 in ein Behandlungsbad gebracht, das pro Liter Wasser
3 g Essigsäure (60 %ig),
5 g Natriumsulfat kalz.,
1,5 g eines Additionsproduktes aus Stearyl-methylethanolamin und 40 EO,
0,025 g der Verbindung der Formel

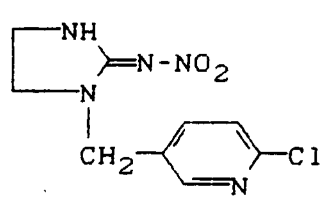

2 g Acid Yellow 151 (= C.J. 13 906)
enthält.

Anschließend wird auf Kochtemperatur erhitzt und die Färbung auf übliche Weise fertiggestellt. Das gelbgefärbte Wollmaterial besitzt einen guten Schutz gegen Motten- und Käferfraß.

Beispiel 2

Teppichgarn, das aus einer Wolle/Polyamid-Mischung im Verhältnis 80:20 besteht, wird bei 40°C im Flottenverhältnis 1:25 in ein Behandlungsbad gebracht, das pro Liter Wasser
0,4 g Essigsäure (60 %ig),

1,2 g Ammoniumsulfat,
0,6 g eines Kondensationsproduktes aus Phenolsulfonsäure, Dihydroxydiphenylsulfon und Formaldehyd,
0,8 g eines Additionsproduktes aus Stearyl-methylethanolamin und 40 EO,
0,1 g der Verbindung der Formel

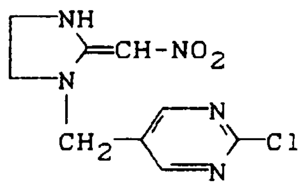

1,5 g Acid Yellow 151 (= C.J. 13 906)
enthält.

Anschließend wird auf Kochtemperatur erhitzt und die Färbung auf übliche Weise fertiggestellt. Der gelbgefärbte Wollanteil des Teppichgarnes besitzt einen guten Schutz gegen Motten- und Käferfraß.

Gute Ergebnise werden auch erhalten, wenn ein Behandlungsbad verwendet wird, daß pro Liter Wasser
0,4 g Essigsäure (60 %ig),
1,2 g Ammoniumsulfat,
1,2 g ®EDOLAN PAW fl.
0,4 g ® AVOLAN S,
0,6 g Acid Yellow 49 (= C.J. 18 640) und die obengenannten Mengen der Verbindung der Formel

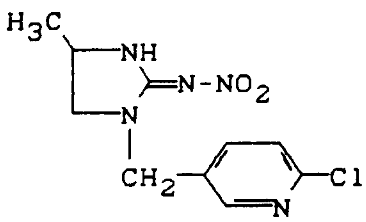

enthält.

Beispiel 3

500 kg Teppichgarn, bestehend aus Wolle oder Wollmischung, vorzugsweise mit Polyamid im Verhältnis 80:20, werden nach dem Kontinue-Waschprozeß pro Stunde auf einer industrie-üblichen Waschanlage gewaschen und ausgerüstet.

Dazu wird im letzten Bottich der Waschanlage die Flotte mit verdünnter Essigsäure auf einen pH-Wert unterhalb 7 eingestellt und pro Liter mit
0,05 g der in Beispiel 1 genannten Wirksubstanz versetzt.

Die Behandlung erfolgt bei 50°C.
Zur Aufrechterhaltung der Wirkstoffkonzentration im Behandlungsbad erfolgt ein Nachsatz von 125 g der vorstehend genannten Verbindung.

Dieser Nachsatz wird als wäßrige Lösung während der gesamten Behandlungszeit dem Bad kontinuierlich zugegeben. Das so behandelte Teppichgarn besitzt einen guten Schutz gegen Motten- und Käferfraß. Dies gilt auch für den daraus gefertigten Endartikel.

Beispiel 4

1.000 kg Rohwolle werden nach dem Kontinue-Waschprozeß pro Stunde in einem Leviathan oder einer vergleichbaren Anlage (z.B. Mini-Bowl) gewaschen und ausgerüstet.

Dazu wird im letzten Bottich des Leviathans die Flotte mit verdünnter Essigsäure auf einen pH-Wert unterhalb 7 eingestellt und pro Liter mit
0,05 g einer der Verbindung gemäß Beispiel 1
versetzt.

Die Behandlung erfolgt bei 70°C.
Zur Aufrechterhaltung der Wirkstoffkonzentration im Behandlungsbad erfolgt ein Nachsatz von 250 g der vorstehend genannten Verbindung.

Dieser Nachsatz wird als wäßrige Lösung während der gesamten Behandlungszeit dem Bad kontinuierlich zugegeben. Die so behandelte Rohwolle besitzt einen guten Schutz gegen Motten- und Käferfraß. Die Wolle kann allen in der Textilindustrie üblichen Weiterverarbeitungsprozessen zugeführt werden.

Beispiel 5

5.000 kg Rohwolle werden in der Spinnerei-Vorbereitung beim Mischen im Sprühverfahren ausgerüstet. Der Sprühauftrag ist dabei integrierter Bestandteil der Spinnschmälze gemäß dem folgenden Richtrezept.

| | |
|---|---|
| Gesamtauftrag | 625 l, |
| darin enthalten | 75 l einer Spinnschmälze (®Solfil 591) |
| | 1.250 g der Wirksubstanz gemäß Beispiel 1 |
| | Rest ist Wasser |

Die so behandelte Rohwolle besitzt einen guten Schutz gegen Motten- und Käferfraß. Die Wolle kann allen in der Textilindustrie üblichen Weiterverarbeitungsprozessen zugeführt werden.

Beispiel 6

Wolle, Wollgarn oder Flächengebilde aus Wolle wird bei 20 bis 40°C im Flottenverhältnis 1:10 in ein Behandlungsbad gebracht, das pro Liter Wasser
3 g Essigsäure (60 %ig),
1 g eines Ammoniumsalzes eines $C_{12}$-$C_{14}$-Alkylsulfonatgemisches und
0,025 g der Verbindung der Formel

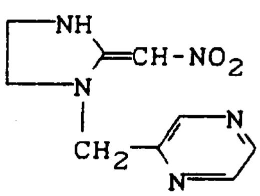

enthält.
Anschließend wird auf 60°C erhitzt und das Behandlungsbad bei dieser Temperatur belassen.
Das so ausgerüstete Wollmaterial besitzt einen guten Schutz gegen Motten- und Käferfraß.

Beispiel 7

Eine Teppichware, welche im Pol 2.000 g/m² hat und deren Grundgewebe aus Polypropylen oder Jute besteht, wird mit einer Lösung besprüht, die pro Liter Wasser bei einem Sprühauftrag von 20 % vom Warengewicht
1 g eines Ammoniumsalzes eines $C_{12}$-$C_{14}$-Alkylsulfonatgemisches und
1,25 g der Verbindung der Formel

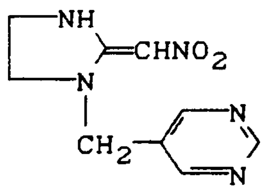

enthält.

Der Sprühauftrag erfolgt über die gesamte Breite der Ware gleichmäßig, wobei sich die Sprühkegel leicht überlappen sollen. Anschließend wird die Ware in den Trockner geführt.

Die so behandelte Teppichware besitzt einen guten Schutz gegen Motten- und Käferfraß im gesamten Polmaterial, sowohl auf der Poloberfläche wie in der Tiefe des Pols.

Beispiel 8

Eine Teppichware, welche im Pol 2.000 g/m² hat und deren Grundgewebe aus Polypropylen oder Jute besteht, wird im Schaumauftragsverfahren ausgerüstet. Der Schaumauftrag kann dabei nach folgendem System erfolgen:

| | |
|---|---|
| Geschwindigkeit | 4m/Min. |
| Naßauftrag | 30 % |
| Verschäumung | 1:50 |
| Kissendruck | 0,4 bar |

Die zu verschäumende Flotte enthält pro Liter Wasser
5 g Dodecyloxyethyl-dihydroxyethyl-aminoxid,
0,85 g der Wirksubstanz von Beispiel 7.

Die Penetration des Pols bis in die Tiefe ist gut, ohne daß die Feuchtigkeit in das Grundgewebe durchschlägt. Die so behandelte Teppichware besitzt einen guten Schutz gegen Motten- und Käferfraß sowohl auf der Poloberfläche wie auch in der Tiefe des Pols.

Beispiel 9

Eine Wollstückware von 500 g/m² Gewicht wird auf einem Foulard so behandelt, daß eine Flottenaufnahme von 100 %, bezogen auf das Warengewicht, resultiert.

Die Flotte enthält pro Liter Wasser
2 g eines Ammoniumsalzes eines $C_{12}$-$C_{14}$-Alkylsulfonatgemisches und
0,25 g der Verbindung der Formel

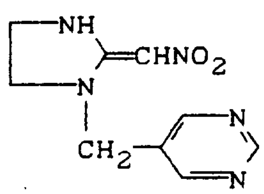

Aus dem Foulard wird die Ware in den Trockner bzw. Spannrahmen geführt.

Die so behandelte Stückware besitzt einen guten Schutz gegen Motten- und Käferfraß.

Beispiel 10

Wolle, Wollgarn oder ein Flächengebilde aus Wolle wird bei 40°C im Flottenverhältnis 1:10 in ein Behandlungsbad gebracht, das pro Liter Wasser
3 g Essigsäure (60 %ig),

5 g Natriumsulfat kalz.,
1,5 g eines Additionsproduktes aus Stearyl-methylethanolamin und 40 EO,
0,25 mg der Verbindung der Formel

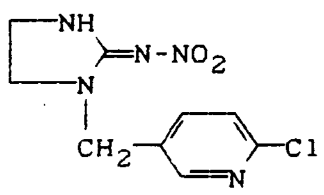

sowie
0,75 mg der Verbindung der Formel

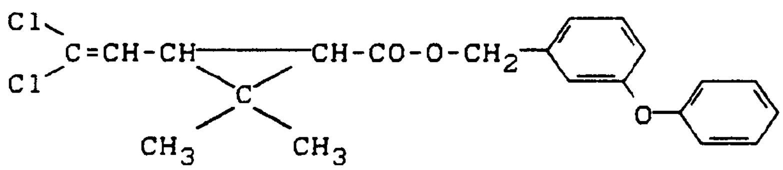

2 g Acid Yellow 151 (= C.J. 13 906)
enthält.

Anschließend wird auf Kochtemperatur erhitzt und die Färbung auf übliche Weise fertiggestellt. Das gelbgefärbte Wollmaterial besitzt einen guten Schutz gegen Motten- und Käferfraß.

Beispiel 11

Teppichgarn, das aus einer Wolle/Polyamid-Mischung im Verhältnis 80:20 besteht, wird bei 40°C im Flottenverhältnis 1:25 in ein Behandlungsbad gebracht, das pro Liter Wasser
0,4 g Essigsäure (60 %ig),
1,2 g Ammoniumsulfat,
0,6 g eines Kondensationsproduktes aus Phenolsulfonsäure, Dihydroxydiphenylsulfon und Formaldehyd,
0,8 g eines Additionsproduktes aus Stearyl-methylethanolamin und 40 EO,
0,25 mg der Verbindung der Formel

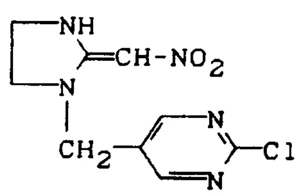

sowie
0,75 mg der Verbindung der Formel

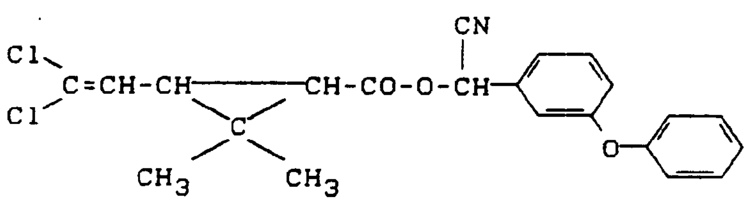

1,5 g Acid Yellow 151 (= C.J. 13 906)
enthält.

Anschließend wird auf Kochtemperatur erhitzt und die Färbung auf übliche Weise fertiggestellt. Der gelbgefärbte Wollanteil des Teppichgarnes besitzt einen guten Schutz gegen Motten- und Käferfraß.

Beispiel 12

500 kg Teppichgarn, bestehend aus Wolle oder Wollmischung, vorzugsweise mit Polyamid im Verhältnis 80:20, werden nach dem Kontinue-Waschprozeß pro Stunde auf einer industrie-üblichen Waschanlage gewaschen und ausgerüstet.

Dazu wird im letzten Bottich der Waschanlage die Flotte mit verdünnter Essigsäure auf einen pH-Wert unterhalb 7 eingestellt und pro Liter mit
0,5 mg der Verbindung der Formel (A)

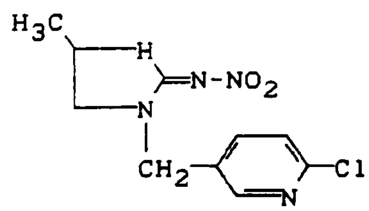

sowie
1,5 mg der Verbindung der Formel (B)

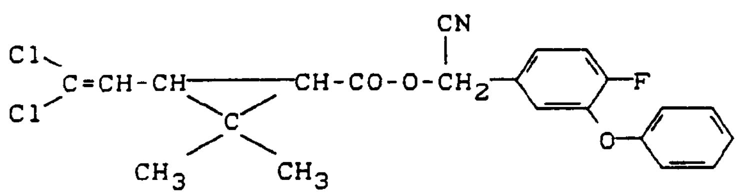

versetzt.

Die Behandlung erfolgt bei 50°C.
Zur Aufrechterhaltung der Wirkstoffkonzentration im Behandlungsbad erfolgt ein Nachsatz von
1,25 g der vorstehend genannten Verbindung der Formel (A)
und
3,75 g der vorstehend genannten Verbindung der Formel (B).

Dieser Nachsatz wird als wäßrige Lösung während der gesamten Behandlungszeit dem Bad kontinuierlich zugegeben. Das so behandelte Teppichgarn besitzt einen guten Schutz gegen Motten- und Käferfraß. Dies gilt auch für den daraus gefertigten Endartikel.

**Patentansprüche**

1. Verfahren zur Behandlung von keratinhaltigen Textilmaterialien zum Schutz gegen Befall und Fraßschäden durch Keratinschädlinge, dadurch gekennzeichnet, daß man Nitronmethylen- oder Nitroiminoimidazolin sowie übliche Formierhilfsmitel enthaltende Mittel verwendet.

2. Verfahren gemäß Anspruch 1, dadurch gekennzeichnet, daß das Mittel eine Verbindung der Formel

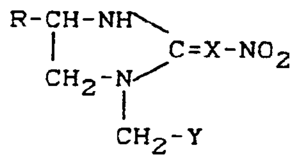

(I)

worin
R für H oder $CH_3$,
X für CH oder N und
Y für einen gegebenenfalls durch Halogen oder $C_1$-$C_4$-Alkyl substituierten Pyridin-, Pyrazin- oder Pyrimidinrest stehen,
enthält.

3. Verfahren gemäß Anspruch 2, dadurch gekennzeichnet, daß es die Verbindung der Formel

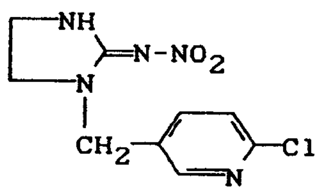

enthält.

4. Verfahren nach Anspruch 1, dadurch gekennzeichnet, daß das Mittel eine Kombination aus Nitromethylenund Nitroiminoimidazoline einerseits und Cyclopropancarbonsäurephenoxybenzylester oder 5-Phenylcarbamoyl-barbitursäurederivat oder Chlormethylsulfonamidodiphenylether oder Diphenylharnstoffe andererseits sowie übliche Formierhilfsmittel enthält.

5. Verfahren gemäß Anspruch 4, dadurch gekennzeichnet, daß das Mittel mindestens eine Verbindung der Formel

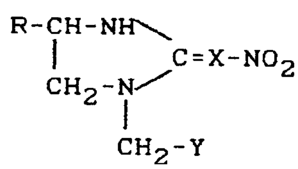

(I)

worin
R für H oder $CH_3$,
X für CH oder N und
Y für einen gegebenenfalls durch Halogen oder $C_1$-$C_4$-Alkyl substituierten Pyridin-, Pyrazin- oder Pyrimidinrest stehen, sowie mindestens eine Verbindung der Formel

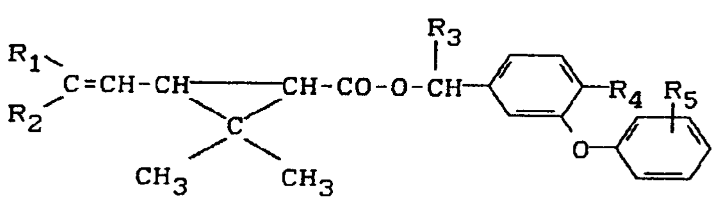

(II)

in welcher
$R_1$ für Wasserstoff, Alkyl oder Halogen,
$R_2$ für Alkyl, Halogen, gegebenenfalls durch Halogen substituiertes Phenyl,
$R_3$ für Wasserstoff, Cyano oder Ethinyl,
$R_4$ für Wasserstoff oder Halogen und

| | |
|---|---|
| $R_5$ | für Wasserstoff oder Halogen stehen, |

oder

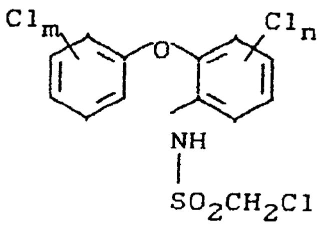

(III)

in welcher
die Summe von m und n bei 4-7 liegt,
oder

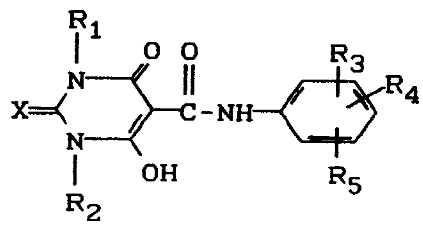

(IV)

in welcher

| | |
|---|---|
| X | Sauerstoff oder Schwefel, |
| $R_1$ und $R_2$ | jeweils Alkyl mit 3 oder 4 C-Atomen, Alkenyl mit 3 oder 4 C-Atomen, Benzyl oder gegebenenfalls substituiertes Phenyl, |
| $R_3$ | Halogen, Nitro oder C(Halogen)$_3$, |
| $R_4$ | Wasserstoff, Halogen oder C(Halogen)$_3$ und |
| $R_5$ | Wasserstoff, Halogen, Methyl oder Methoxy |

bedeuten
oder

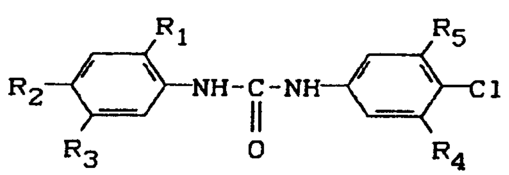

(V)

wobei

| | |
|---|---|
| $R_1$ | Wasserstoff oder 4-Chlorphenoxy-6-sulfonat, |
| $R_2$ | Wasserstoff oder Chlor, |
| $R_3$ | Wasserstoff oder Trifluormethyl, |
| $R_4$ | Wasserstoff oder Chlor, |
| $R_5$ | Wasserstoff oder Trifluormethyl bedeuten |

enthält.

6. Verfahren nach Anspruch 1, dadurch gekennzeichnet, daß man die Behandlung in wäßrigem Medium durchführt.

## Claims

1. Process for the treatment of keratin-containing textile materials for protection against attack and eating damage by keratin pests, characterised in that agents comprising nitromethylene- or nitroiminoimidazoline and customary formulation auxiliaries are used.

2. Process according to Claim 1, characterised in that the agent comprises a compound of the formula

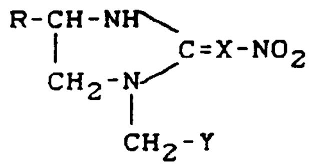

(I)

wherein

R represents H or $CH_3$,

X represents CH or N and

Y represents a pyridine, pyrazine or pyrimidine radical which is optionally substituted by halogen or $C_1$-$C_4$-alkyl.

3. Process according to Claim 2, characterised in that it comprise. the compound of the formula

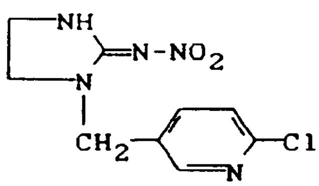

4. Process according to Claim 1, characterised in that the agent comprises a combination of nitromethyleneand nitroiminoimidazolines on the one hand and phenoxybenzyl cyclopropanecarboxylate or 5-phenylcarbamoyl-barbituric acid derivative or chloromethylsulphonamidodiphenyl ether or diphenylureas on the other hand and customary formulation auxiliaries.

5. Process according to Claim 4, characterised in that the agent comprises at least one compound of the formula

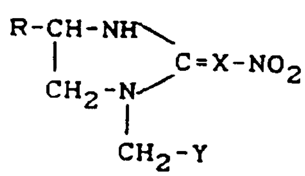

(I)

wherein

R represents H or $CH_3$,

X represents CH or N and

Y represents a pyridine, pyrazine or pyrimidine radical which is optionally substituted by halogen or $C_1$-$C_4$-alkyl,

and at least one compound of the formula

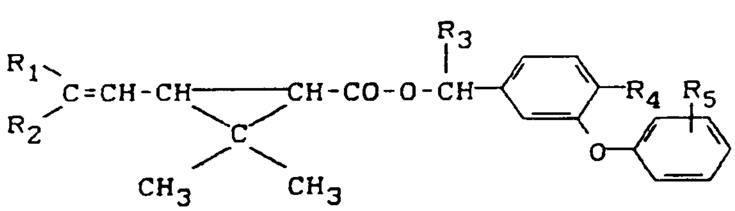

(II)

in which

$R_1$ represents hydrogen, alkyl or halogen,

$R_2$ represents alkyl, halogen or phenyl which is optionally substituted by halogen,

$R_3$ represents hydrogen, cyano or ethinyl,

$R_4$ represents hydrogen or halogen and

$R_5$ represents hydrogen or halogen,

or

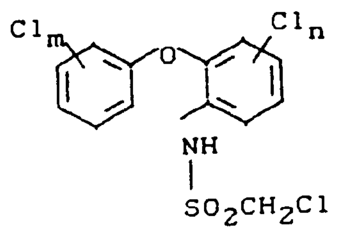

(III)

in which
the sum of m and n is 4-7,

or

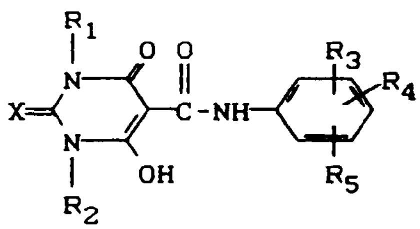

(IV)

in which

X denotes oxygen or sulphur,

$R_1$ and $R_2$ in each case denote alkyl having 3 or 4 C atoms, alkenyl having 3 or 4 C atoms, benzyl or optionally substituted phenyl,

$R_3$ denotes halogen, nitro or C(halogen)$_3$,

$R_4$ denotes hydrogen, halogen or C(halogen)$_3$ and

$R_5$ denotes hydrogen, halogen, methyl or methoxy,

or

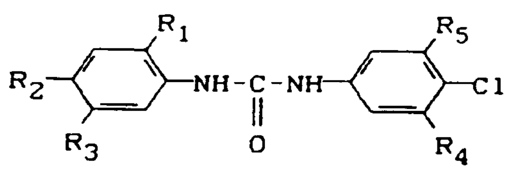

(V)

wherein

$R_1$ denotes hydrogen or 4-chlorophenoxy-6-sulphonate,

$R_2$ denotes hydrogen or chlorine,

$R_3$ denotes hydrogen or trifluoromethyl,

$R_4$ denotes hydrogen or chlorine and

$R_5$ denotes hydrogen or trifluoromethyl.

6. Process according to Claim 1, characterised in that the treatment is carried out in an aqueous medium.

## Revendications

1. Procédé pour le traitement de matières textiles contenant de la kératine à titre de protection contre l'attaque des parasites de la kératine et les dégâts nutritifs provoqués par ces derniers, caractérisé en ce qu'on utilise des agents contenant de la nitrométhylène- ou nitroiminoimidazoline ainsi que des auxiliaires de façonnement usuels.

2. Procédé selon la revendication 1, caractérisé en ce que l'agent contient un composé de formule

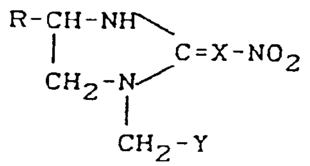

(I)

dans laquelle

R représente H ou $CH_3$,

X représente CH ou N et

Y représente un radical pyridine, un radical pyrazine ou un radical pyrimidine éventuellement substitués par un atome d'halogène ou par un groupe alkyle en $C_1$-$C_4$.

3. Procédé selon la revendication 2, caractérisé en ce qu'il contient le composé de formule

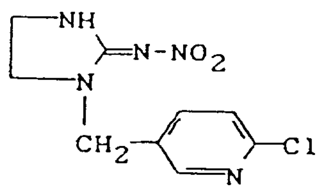

4. Procédé selon la revendication 1, caractérisé en ce que l'agent contient une combinaison de nitrométhylène- et nitroiminoimidazolines d'une part, et d'esters phénoxybenzyliques de l'acide cyclopropanecarboxylique ou d'un dérivé de l'acide 5-phénylcarbamoyl-barbiturique ou d'éthers chlorométhylsulfonamidodiphényliques ou encore de diphénylurées d'autre part, ainsi que des auxiliaires de façonnement usuels.

5. Procédé selon la revendication 4, caractérisé en ce que l'agent contient au moins un composé de formule

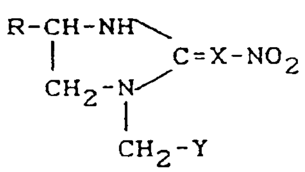

(I)

dans laquelle

R représente H ou $CH_3$,

X représente CH ou N et

Y représente un radical pyridine, un radical pyrazine ou un radical pyrimidine éventuellement substitués par un atome d'halogène ou par un groupe alkyle en $C_1$-$C_4$.

ainsi qu'au moins un composé de formule

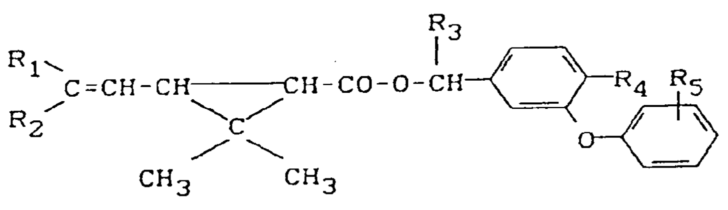

(II)

dans laquelle

$R_1$ représente un atome d'hydrogène, un groupe alkyle ou un atome d'halogène,

$R_2$ représente un groupe alkyle, un atome d'halogène, un groupe phényle éventuellement substitué par un atome d'halogène,

$R_3$ représente un atome d'hydrogène, un groupe cyano ou un groupe éthynyle,

$R_4$ représente un atome d'hydrogène ou un atome d'halogène et

$R_5$ représente un atome d'hydrogène ou un atome d'halogène

ou

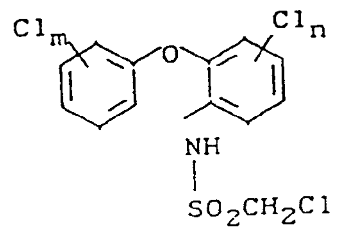

(III)

dans laquelle
la somme de m et n se situe à 4-7
ou

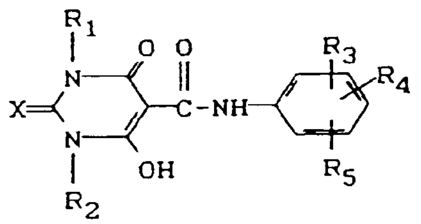

(IV)

dans laquelle

| | |
|---|---|
| X | représente un atome d'oxygène ou un atome de soufre, |
| $R_1$ et $R_2$ | représentent chacun un groupe alkyle contenant 3 ou 4 atomes de carbone, un groupe alcényle contenant 3 ou 4 atomes de carbone, un groupe benzyle ou un groupe phényle éventuellement substitué, |
| $R_3$ | représente un atome d'halogène, un groupe nitro ou C(halogène)$_3$, |
| $R_4$ | représente un atome d'hydrogène, un atome d'halogène ou C(halogène)$_3$ et |
| $R_5$ | représente un atome d'hydrogène, un atome d'halogène, un groupe méthyle ou un groupe méthoxy |

ou

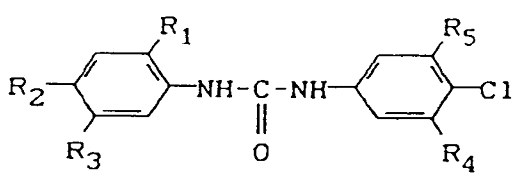

(V)

dans laquelle

| | |
|---|---|
| $R_1$ | représente un atome d'hydrogène ou le 4-chlorophénoxy-6-sulfonate, |
| $R_2$ | représente un atome d'hydrogène ou un atome de chlore, |
| $R_3$ | représente un atome d'hydrogène ou un groupe trifluorométhyle, |
| $R_4$ | représente un atome d'hydrogène ou un atome de chlore, |
| $R_5$ | représente un atome d'hydrogène ou un groupe trifluorométhyle. |

6. Procédé selon la revendication 1, caractérisé en ce qu'on effectue le traitement dans un milieu aqueux.